# EUROPEAN PATENT APPLICATION

(11) **EP 2 835 351 A1**
(43) Date of publication of application: **11.02.2015**
(21) Application number: 12873670.9
(22) Date of filing: 05.04.2012
(51) Int. Cl.: C01C 1/04, C01B 3/02

(54) **GAS PRODUCTION DEVICE AND METHOD**

(71) Applicant: Acosta Estrada, Marcelo, Quito (EC)
(72) Inventor: Acosta Estrada, Marcelo, Quito (EC)
(74) Representative: Carpintero Lopez, Francisco
(86) International application number: PCT/EC2012/000021
(87) International publication number: WO 2013/149624

(57) **Abstract**

The invention relates to a device and method which, with the use of dopamine in an alkaline aqueous medium, can be used to obtain nitrogen from moist air and to generate other gases, hydrogen in the free or combined state, such as ammonium. The reaction medium is ionic and reinforced by means of electrolysis, using electrodes of different metals and at a temperature and pressure close to ambient conditions.

## Description

### FIELD OF THE INVENTION

The invention relates to chemistry technology field and more specifically to water electrolysis, and proposes a gas stream obtaining method through the pass of an air stream on ionic surface, useful for application in the power generation.

### BACKGROUND OF THE INVENTION

Ammonia is an essential compound in the food production and this will continue either as ammonia in liquid phase or as nitrogen compounds such as nitrates and urea. Another prospective use is as fuel, due to its use in internal combustion machine will produce innocuous products such as nitrogen and water.

The production of nitrogen from air has a long history. In 1895 Ragleigh found that be obtained when the passage of air through an electric arc is not allowed. In 1900, Norwegians Birkeland and Eyde developed a process based on that mentioned discovery. The product obtained (calcium nitrate) known as "norge saltpetre" was the only successful effort for a long time. Efforts to obtain a more efficient process continued, and in 1918 the Nobel Prize in Chemistry awarded to Fritz Haber for the discovery of the scientific basis for the development of industrial process that bears his name, and in which most of the processes that constitute the current technology for obtaining ammonia commercially have been based. Most of these processes, although obtain nitrogen from the air; the hydrogen used is originated in hydrocarbons or in water electrolysis.

Multiple improvements have not changed substantially the Haber discovery for the ammonia production; which are briefly described as the contact of nitrogen from air and hydrogen, at lowest temperature, over a catalyst at elevated pressure and temperature.

The unique processes operated at ambient temperature and pressure to capture nitrogen from the air, are made by leguminous plants naturally. The nitrogen is combined and produces compounds such as nitrates, which are fixed directly on the floor or on the roots of plants, and improves the productivity of agricultural crops.

For that reason the capture of the nitrogen from the air has been called nitrogen fixation. Other reported processes are improvements of said process and generally have started from specialized microorganisms, mostly improved by genetic modifications, and that operates in carefully conditioned environments.

Other inventions in this field are characterized by procedures seeking the purified hydrogen and nitrogen gas conversion as raw materials for gaseous ammonia or other nitrogenous gases obtaining by chemical reaction. All the above mentioned processes have in common that operating conditions are extreme.

For example, Louis O'Hare in Patent US 4451436, "Nitrogen Fixation by Plasma and catalyst", uses the electrical discharge of an electrode, at frequencies between 60 and 600Hz, and voltages between 6 and 10 kilovolts for the reaction of nitrogen and hydrogen molecules and atoms in plasma state, over a catalyst. Ultraviolet radiation is used to avoid the recombination of the products.

Likewise, Patent US 4482525, by Hao-Lin Chen, titled "Nitrogen Fixation Apparatus", uses an electrical arc and fixes nitrogen from the air by a specially designed chamber for achieve a proper relation of energy and pressure (5 and 55 kV/atmosphere oxygen/cm) at temperature of 3000 °K in order to obtain both nitrogen and oxygen in an excited vibrational state for obtain nitrous oxide finally.

Patent US 7811442, "Method and Apparatus for Anhydrous Ammonia Production" by John H. Holbrook and Jason K. Handley, published in October, 2011, uses an aqueous electrolyte in vapor phase, proton generator with perovskite and dopant at temperature between 400 °C and 800 °C and pressure between 10 to 300 atmospheres. The dopants are alkaline earth metals and others such as La, Ce, Pr, Nd, Pm, Sm, Eu, Gd, Tb, Dy, Ho, Er, Tm, Yb, Sc, Y, Lu, B, Al, Ga, In, Sb, Bi, Cr, Fe, Ru, Os, Co, Rh; and the electrocatalyst used are oxides, sulfides and alloys of Pt, Pd, Ni, Co, Cu, Ag, W, Os, Ru, Rh, Ir, Cr, Fe, Mo, V, Re, Mn, Nb, Ta.

On the other hand, technologies for production of pure hydrogen by electrolysis, from water with alkaline electrolyte, are well known. In the last years, it have been granted several patents relates to improvements of the components of the basic electrochemical cells, especially directed to better electrode materials and mainly patents referred to improvements in permeable membranes and membrane reactors.

However, hydrogen production currently causes damage to the environment in different nature and different severity levels.

On the other hand, two types of cells are operating in industry; solid oxidation cells and alkaline cells. In the last one, concentrations of sodium or potassium hydroxide are used around 3N and 5N, and temperatures between 70 °C and 90 °C. Cells have voltages between 1 to 2.2 volts (efficiencies between 68% and 80%) and current of about 150 mA/cm² of electrode. It is desirable do not work over thermo-neutral potential because over this value inefficiency occurs due to the cell emit energy that is wasted.

The values of voltage and current in the cell of this invention are close to the values of the reversible potential for the reaction of dissociation of water into hydrogen and oxygen, especially when the electrodes are close, leaving a very small distance between them. In the alkaline electrolyte with a concentration of sodium or potassium hydroxide between 1 N and 1.5N ions that reach the surface are produced. If the water fluid surface is not isolated a decreasing of fluid volume is not appreciated, in the course of time. Further, combination of ions in aqueous phase is not observed.

If the presence of air is avoided hydrogen may be collected from the cathode, on the fluid surface, in different ways. A method used in this invention is by foam, taking into account the saponification ability of the alkaline hydroxides.

All current industrial processes for obtaining ammonia are conducted under elevated pressure (about 400 atmospheres) and high temperature (about 260 °C). Its technical and scientific basis comes from the Haber-Bosch process, on nineteenth century. The processes operating conditions based on the Haber discovery require of a costly infrastructure because of the containers and pipes materials. The operations control systems are sophisticated and both the transporting raw materials and the contact with them should be carefully made due to the inherent risks.

On the other hand, in the processes currently in use, the hydrogen provision usually involves complicated technology for extracting thereof from the source materials whether these be hydrocarbons, coal or other process wastes, this produces a transfer of the environmental contamination problem from the ammonia production plant to the hydrogen generation plant. All the above mentioned involves a significant energy cost.

### DISCLOSURE OF THE INVENTION

This invention provides a knowledge that enables the secure and economic hydrogen and other gases provision, at ambient pressure and low temperatures, in ionic medium and preferably in situ.

The method of this invention results in production of ammonia at ambient pressure and temperature lower than the water boiling point.

In contrast to the aforementioned, in the present invention because of the operating conditions, it does not require expensive equipments and ammonia can be obtained in situ as required.

The invention is based in the dopamine property of increase the ions mobility in aqueous solutions, as well as the ion transfer number, particularly on the ionic solution surface.

Thus, hydrogen production in an alkaline aqueous medium, that occur when air is blow over the surface of an aqueous medium containing dopamine and ions are explained. Nitrogen molecules and steam are energized to allow a reaction that results gaseous ammonia.

The efficiency is improved when there is an increased in the ionization by electrolysis of the aqueous solution carried out in an electrochemical cell.

The electrolyte comprises an aqueous solution containing dopamine and an alkaline electrolytic support that increases the solution conductivity at low concentrations. Gas hydrogen uncombined obtaining, at low temperature and ambient pressure, occurs in other cases, both in a standard electrochemical cell as in water and dopamine with an alkaline support electrolyte.

Obtaining other gases according the present invention is achieved by decomposition of appropriate salts, added to the electrolyte aqueous solution or by direct contact of gaseous compounds on the ionic surface.

During the gas production does not occurs a significant increase of the reaction temperature.

The invention enables the hydrogen production and use thereof whether these be as ammonia or pure in situ; making possible multiple applications, being the most important, that an alternative fuel is provided.

In the present invention the main raw material in quantity terms is water, which is not used in significant quantities during the method, followed by the natural or synthetic dopamine, in the same terms, and alkaline electrolyte support. If it is desirable to manage the method by electric energy in electrochemical cells, for a better efficiency, it can be satisfied using solar energy, due to the demand is reasonably accessible to the available technologies for the provision of energy in this way.

Additionally, according to the present invention is possible to obtain ammonia and hydrogen, or mixtures thereof, from an alkaline solution containing dopamine increasing the ion concentration on the fluid surface by any means including by increasing the liquid surface tension, slightly raising the temperature and removing gases produced by prevention or allowing of air presence as applicable.

The alkaline electrolyte as described in the preceding paragraph may be trapped on an alkaline matrix containing hygroscopic compounds and metal alloys, oxides, hydroxides or resins providing an economical application of this technology.

Obtaining the mentioned gases is performed at ambient pressure. According to the electrode materials results a temperature increase but lower than the water boiling point, which can be naturally or by the provision of thermal energy.

### DETAILED DESCRIPTION OF THE INVENTION

According to the above, an object of the present invention is a method for obtaining a gaseous stream containing ammonia, hydrogen and hydrocarbon wherein a moist air stream is contacted with the surface of a catalytic solid layer and an ionic aqueous surface caused by two metal electrodes energized with electric current. These electrodes can be unipolar, bipolar, porous or granular; and they can be metal alloys selected from iron, nickel, copper, carbon, nickel, zinc, tin, magnesium, aluminum, titanium, gold and silver, being steel as anode and copper as cathode the preferred electrode arrangement.

Initially, the moist air stream pass through a semi permeable barrier containing ilmenite on which it reacts and further it reacts with the aqueous ionic surface formed by an electrolyte containing dopamine between 0.5 - 15% by weight of the aqueous solution wherein dopamine can be extracted from the juice of the banana plant or also can be used dopamine hydrochloride.

The electrolyte further contains sodium hydroxide, potassium hydroxide and/or 1,2 dihydroxybenzene between 1N and 2N as supporting electrolyte; a dissociable salt which can be selected from sodium tungstate (Na₂WO₄.2H₂O), sodium molybdate (Na₂MoO₄.2H₂O) and/or water-insoluble oxides or hydroxides of metals such as iron, nickel, barium, calcium and magnesium. Optionally, a source of thermal energy is provided to achieve the desired temperature values. Temperature values can range from 12-80 °C at ambient pressure or vacuum.

An object of the present invention is obtaining hydrogen gases such as hydrogen, hydrocarbons and ammonia, preferably ammonia and hydrogen by the method above described.

Another object of the present invention is a method for obtaining ammonia, hydrogen and hydrocarbons having the above conditions, using pure nitrogen, steam or other gas instead of air, as another embodiment.

Another object of the present invention is a method for producing a gas stream containing ammonia, hydrogen and hydrocarbons wherein the electrolyte used is a halide salt of the first column elements of the periodic table, wherein further obtain other gases mixed or pure.

Another distinctive characteristic of the present invention is that hydrogen gas is recovered in foam formed by surfactants.

Another object of the present invention relates to an equipment for producing a gas stream containing ammonia, hydrogen and hydrocarbons consisting of a cylindrical tube (1) located horizontally, having two opposite opening of smaller diameter (2) and (3); a wire anode (4) connected to the positive pole of the power source through a wire conductor; a cathode (5) consisting of a wound around the anode, connected to the negative pole of the power source, both submerged in electrolyte fluid deposited at the bottom of the tube and covering the electrodes; and a porous ceramic barrier (6) near to the opening (2).

According to the method of the present invention, a moist air stream or gas through the opening (2) through the barrier (6) wherein humid air reacts with the ilmenite which internally covers the ceramic surface producing ammonia, which pass through the active surface caused by the ions produced by the anode (4) and the cathode (5) forming a ionized steam cloud which returns to react with the nitrogen from the air on the barrier, forming gases which are dragged into the opening (3) wherein they are collected.

The cylindrical tube (1) is internally coated with a metal catalyst layer.

In accordance with the method of the present invention, the voltage used is between 0.5 and 6 volts/cm² of cathode.

The possibility of generation of pure hydrogen or ammonia in situ, for practical use, for example in motor vehicles, is not only a great savings itself due to the favorable conditions proposed in this invention for the generation of these gases, but when that occurs at the required site and in a required amount do not need gases compression, or storage thereof.

Because of actual energy crisis rising production costs and causes serious consequences including unemployment, forcing undesirable actions of hegemonic governments worldwide, to achieve domain of resources that are strategic; this invention collaborate with the improvement of processing techniques in diverse industries and implement new technologies, and further its application would result in less damage of human actions on the environment and contribute to world peace.

The following examples illustrate the invention in more detail but do not limit the scope thereof.

### EXAMPLES

Assays were performed in batches and continuously.

### Example 1- Ammonium, hydrogen and hydrocarbons obtaining.

Assays were carried out in a semi continuous electrochemical cell containing the following parts at ambient conditions of pressure and temperature:
1. A power source with adjustable current voltage and intensity.
2. A cylindrical glass tube of 96 mm diameter, 220 mm length, located horizontally, with two opposite opening of smaller diameter.
3. An anode consisting of a stainless wire, AISI 316, of 3 mm diameter, 250 mm length (submerged area of 2000 mm²) connected to the positive pole of the power source by a conductor wire. The metal was pretreated with concentrated nitric acid for passivating the metal.
4. A cathode consisting of a copper alloy solid wire of 2 mm wound around the anode, in coils of 1 cm in diameter, connected by a conductor wire (submerged area 6000 mm²) to the negative pole of power source.
5. A volume of 150 cm³ of fluid electrolyte comprising an aqueous mixture of sodium hydroxide 1 N and 10 cm³ of squeezing of the banana plant (fluid surface area 2000 mm²), deposited on the bottom of the container and covering electrodes.
6. A plastic tube of 5 mm in diameter, through which was blown moist air 100 cm³/s through a porous ceramic, over electrolyte surface. Relative humidity of 30%.
7. A porous ceramic surface ilmenite impregnated (Ti-Fe) of 6000 mm² cross-sectional area exposed to the air.
8. Direct Current (3V and 3A).
9. A plastic tube to allow the reaction products release.

During experimentation was observed that a fog of ionized steam is directed opposite to the airflow toward the ceramic surface. In the outlet stream from the semi continuous electrochemical cell different concentrations of ammonium, hydrogen, oxygen and nitrogen were detected by quantitative analytical tests. A rapid qualitative test for the outlet stream of the electrochemical cell, by introducing therein a paper impregnated with hydrochloric acid allows detecting white clouds of ammonium chloride.

### Example 2

The reaction conditions of Example 1 were repeated excepting that 15, 20 and 25 cm³ of squeezing of the banana plant was added.

### Example 3

The reaction conditions of Example 1 were repeated excepting that dopamine hydrochloride was added instead of banana juice extract. In successive experiments were added 5, 50, 100 and 150 mg of dopamine hydrochloride solution, contained in blebs. Each bleb of 5 cm³ contains 200 mg of dopamine.

### Example 4

The conditions of Example 2 were repeated excepting that the copper cathode was replaced by cathodes of Zn, Mg, Ti alloys, Wood's alloy, steels, bronze and aluminum alloys.

### Example 5

The same conditions of the electrochemical cell of Example 1 excepting that was used a carbon cathode, which caused fine carbon particles in the electrolyte resulting that combustible gas mixtures appears in the outlet current.

### Example 6

The same conditions of the electrochemical cell of Example 1 wherein further is added to the electrolyte calcium phosphate Ca₃ (PO₄)₂ and nickel hydroxide Ni(OH)₂.

### Example 7- Hydrogen Obtaining Method

A batch electrochemical cell comprising:
1. A power source with adjustable current voltage and intensity.
2. A cylindrical glass tube of 96 mm diameter, 220 mm length, vertically located with two parallel opening of smaller diameter.
3. An anode of stainless wire, AISI 316, of 3 mm diameter, 250 mm length (2000 mm² submerged area) which is connected to the positive pole of the power source by a conductor wire. Metal was pretreated with concentrated nitric acid for passivating the metal.
4. A cathode comprising a wound wire of solid copper alloy of 2 mm, forming coils of 1 cm in diameter, connected by a conducting wire (6000 mm² submerged area) to the negative pole of the power source.
5. A volume of 300 cm³ of fluid electrolyte comprising an aqueous mixture of sodium hydroxide 1 N and 10 cm³ of squeezing of the banana plant, covering the electrodes.
6. A porous barrier separating both electrodes, so that their spacing was 4 mm.
7. Direct Current (3V and 3A)

Hydrogen was collected through the cathode opening and oxygen was collected through the anode opening, by vacuum in the cylindrical tube.

### Example 8

The reaction conditions of Example 6 were repeated excepting that the volume of the squeezing of the banana plant were 15, 20 and 25 cm³.

### Example 9

The reaction conditions of Example 7 were repeated excepting that dopamine hydrochloride was added instead of dopamine from the squeezing of the banana plant. In successive experiments were added 5, 50, 100 and 150 mg of dopamine hydrochloride solution, contained in blebs. Each bleb of 5 cm³ contains 200 mg dopamine.

### Example 10

The conditions of Example 6 were repeated excepting that the copper cathode was replaced by cathodes of Zn, Mg, Ti alloys, Wood's alloy, various steels, bronzes and aluminum alloys.

### BRIEF DESCRIPTION OF THE FIGURES

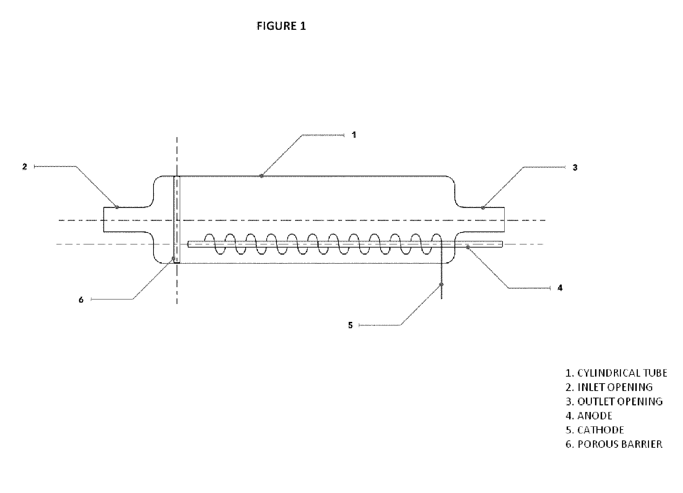

Figure 1 - Gaseous stream obtaining device comprising a cylindrical tube (1) positioned horizontally, having two opposite opening (2) and (3) of smaller diameter; a wire anode (4) connected to the positive pole of the power source through a conductor wire; a cathode (5) connected to the negative pole of the power source comprising a wound around the anode; and a porous ceramic barrier (6).

## Claims

1. A method for the production of a gas stream wherein a moist air stream is contacted on the surface of a solid catalyst layer and an ionic aqueous surface caused by metal electrodes energized with electric current; after passage through a semi permeable barrier where it reacts with the ilmenite contained in its surface at a temperature between 12-80°C and ambient pressure or vacuum, for obtaining a gas stream.

2. A method for the production of a gas stream according to claim 1 wherein the moist air stream reacts over the aqueous ionic surface formed by an electrolyte containing:
(a) dopamine;
(b) a hydroxide as supporting electrolyte;
(c) a dissociable salt and/or oxide or hydroxide.

3. A method according to claim 2 wherein the amount of dopamine is between 0.5 - 15% by weight of the aqueous solution.

4. A method according to claim 2 wherein the dopamine is from the squeezing of the banana plant.

5. A method according to claim 2 wherein the dopamine is dopamine hydrochloride.

6. A method according to claim 2 wherein the oxide and hydroxide are water- insoluble.

7. A method according to claim 1 wherein the metal electrodes are monopolar, bipolar, granular or porous electrodes.

8. A method according to claim 1 wherein the metal electrodes are metal alloys selected from iron, nickel, copper, carbon, nickel, zinc, tin, magnesium, aluminum, titanium, gold and silver.

9. A method according to claim 9 wherein the preferred electrodes arrangement are steel as anode and copper as cathode.

10. A method according to claim 2 wherein the supporting electrolyte is selected from sodium hydroxide, potassium hydroxide and/or 1,2-dihydroxybenzene.

11. A method according to claim 2 wherein the supporting electrolyte concentration is between 1 N and 2N.

12. A method according to claim 2 wherein the salt used are selected from sodium tungstate (Na₂WO₄.2H₂O) and sodium molybdate (Na₂MoO₄.2H₂O).

13. A method according to claim 2 wherein the oxides and hydroxides are selected from metals such as iron, nickel, barium, calcium, magnesium.

14. A method according to claim 1 wherein the gas stream obtained contains ammonia, hydrogen and hydrocarbons.

15. A method according to the preceding claims used for the production of gases such as ammonia, hydrogen, hydrocarbon.

16. A method according to the preceding claims for obtaining ammonium.

17. A method according to previous claims for obtaining hydrogen.

18. A method according to claims 1 and 2 wherein pure nitrogen, steam or other gas instead air are used.

19. A method according to claims 1 and 2 wherein the electrolyte used is a halide salt of the first column elements of the periodic table wherein other gases mixed or pure different than nitrogen and hydrogen are produced.

20. A method according to claims 1 to 14 wherein hydrogen is recovered as a gas in foam formed by surfactants.

21. A device for obtaining a gaseous stream according to the method of the preceding claims comprising a cylindrical tube (1) horizontally located, with two opposite opening (2) and (3) of smaller diameter; a wire anode (4) connected to the positive pole of the power source by a conductor wire; a cathode (5), consisting of a wound around the anode, connected to the negative pole of the power source, both submerged in electrolyte fluid deposited at the bottom of the tube and covering the electrodes; and a porous ceramic barrier (6) close to the opening (2)

22. A device according to claim 20 wherein a moist air stream or gas passing through the opening (2) through the barrier (6) wherein the humid air reacts with the ilmenite which coating internally the ceramic surface producing ammonia which passes through the active area caused by the ions produced by the anode (4) and cathode (5) forming a ionized vapor cloud which reacts on the barrier with the atmospheric nitrogen, forming gas which are dragged into the opening (3) wherein they are collected.

23. A device according to claim 21 wherein the cylindrical tube (1) is coated internally with a metal catalyst layer.
